# FASCICULE DE BREVET EUROPEEN

(11) **EP 1 493 268 B1**
(45) Date de publication et mention de la délivrance du brevet: **02.01.2008**
(21) Numéro de dépôt: 03710108.6
(22) Date de dépôt: 09.04.2003
(51) Int. Cl.: H04N 5/00, H04N 7/16, G07F 7/08

(54) **SYSTEME DE TELEVISION A PEAGE A PRE-PAIEMENT**
FERNSEHSYSTEM MIT VORAUSBEZAHLUNG
TELEVISION SYSTEM WITH PAYMENT IN ADVANCE

(30) Priorité: 11.04.2002 EP 02008061
(43) Date de publication de la demande: 05.01.2005
(73) Titulaire: Nagravision SA, 1033 Cheseaux-sur-Lausanne (CH)
(72) Inventeur: SASSELLI, Marco, CH-1803 Chardonne (CH)
(74) Mandataire: Wenger, Joel-Théophile
(86) Numéro de dépôt international: PCT/IB2003/001319
(87) Numéro de publication internationale: WO 2003/085959

(56) Documents cités:
- EP-A- 0 757 337
- WO-A-01/52124
- WO-A-02/21835
- DE-A- 19 846 452
- US-A- 5 144 663
- US-A- 6 126 069
- US-B1- 6 282 293

## Description

La présente demande concerne le domaine des récepteurs/décodeurs de services à accès conditionnel, en particulier un système d'accès à un flux de données encryptées à comptabilisation par unité de temps.

Comme exemple de tel flux de données, on entend un service d'informations boursière, de météo, de télévision généraliste, d'un événement sportif ou autres. Ces contenus peuvent être diffusés sur des unités d'utilisateurs tels qu'un décodeur de télévision à péage, un ordinateur voire un téléphone portable, un "palm-top", un PDA, une radio, une télévision, une borne multimédia.

Le flux numérique est encrypté afin de pouvoir en contrôler l'utilisation et de définir des conditions pour une telle utilisation. Cette encryption est réalisée grâce à des mots de contrôle (Control Words) qui sont changés à intervalle régulier (entre 5 et 30 secondes) afin de dissuader toute attaque visant à retrouver un tel mot de contrôle.

Pour que l'unité d'utilisateur puisse décrypter le flux encrypté par un mot de contrôle, ce dernier lui est envoyé indépendamment du flux dans un message de contrôle (ECM) encrypté par une clé propre au système de transmission entre le centre de gestion (CG) et le module de sécurité de l'unité d'utilisateur. En effet, les opérations de sécurité sont effectuées dans un module de sécurité (SC) qui est généralement sous la forme d'une carte à puce, réputée inviolable. Ce module peut être soit de type amovible ou directement intégré à l'unité d'utilisateur traitant des signaux tel qu'un décodeur de télévision à péage ou un récepteur DAB. En effet, le fonctionnement de l'invention autorise l'utilisation d'une unité d'utilisateur sans module de sécurité amovible.

Lors de la décryption du message de contrôle (ECM), il est vérifié, dans le module de sécurité (SC), que le droit pour accéder au flux considéré est présent. Ce droit peut être géré par des messages d'autorisation (EMM) qui charge un tel droit dans l'unité (SC). D'autres possibilités sont également possibles tels que l'envoi de clés de décryptage.

La comptabilisation de l'utilisation de tels contenus est aujourd'hui basée sur le principe de l'abonnement, de l'achat d'événements ou du paiement par unité de temps.

L'abonnement permet de définir un droit associé à un ou des canaux de diffusion et permet à l'utilisateur d'obtenir ces canaux décryptés si le droit est présent dans son module de sécurité.

Parallèlement, il est possible de définir des droits propres à un contenu, tel qu'un film
ou un match de football. L'utilisateur peut acquérir ce droit (achat par exemple) et ce contenu sera spécifiquement géré par ce droit. Cette méthode est connue sous l'appellation "pay-per-view" (PPV).

Pour ce qui concerne le paiement par unité de temps, le module de sécurité comprend un crédit qui est débité en fonction de la consommation réelle de l'utilisateur. Ainsi par exemple, une unité sera débitée chaque minute à ce crédit quelque soit le canal regardé. Il est possible selon les implémentations techniques, de varier l'unité de comptabilisation, soit dans la durée, soit dans la valeur du temps alloué, voire en combinant ces deux paramètres pour adapter la facturation au type de produit transmis.

Lors du décryptage des mots de contrôle, il sera vérifié si un droit associé aux conditions d'accès est présent dans l'unité de sécurité.

Le mot de contrôle n'est retourné sous forme décryptée à l'unité d'utilisateur que lorsque la comparaison est positive.

Cette manière de faire exige que le centre de gestion connaisse l'utilisateur, son adresse physique, ses coordonnées bancaires ainsi que tout le trafic de paiement qui permet de renouveler ses droits. En effet, le principe de l'abonnement est basé sur l'obligation de renouvellement c'est-à-dire qu'un droit s'éteint de lui-même s'il n'est pas renouvelé. Cette façon de procéder évite qu'une personne qui souscrit à tous les canaux disponibles résilie son abonnement et s'arrange pour que le message de résiliation n'arrive jamais à son unité d'utilisateur. C'est pourquoi un tel droit comporte une limite dans le temps et son droit pour tous les canaux, s'il n'est pas renouvelé, s'éteint automatiquement à la fin d'un mois par exemple.

On imagine donc le travail nécessaire pour suivre les milliers d'abonnés qui règlent régulièrement leurs factures et auxquels il faut envoyer un message de renouvellement chaque mois. De plus, un tel message doit être répété durant plusieurs jours car le système de gestion ne sait pas si l'unité d'utilisateur est enclenchée.

Il arrive d'ailleurs fréquemment qu'un utilisateur qui était en vacances et qui avait déclenché son appareil, se retrouve à son retour avec son unité d'utilisateur bloquée. Il faut alors qu'il appelle le centre de gestion pour qu'un message de renouvellement personnalisé lui soit envoyé.

Ainsi, une grande partie des ressources et des coûts liés à la gestion d'un centre est allouée à la gestion des abonnés.

Une première solution utilisant un porte-monnaie électronique est décrite dans le document US 6'282'293. La carte à puce contient un crédit qui est débité lors de l'accès à un contenu encrypté. Les informations de comptabilisation sont contenues dans le signal diffusé et permettent cette comptabilisation. Pour la recharge du crédit, l'unité d'utilisateur appelle un centre de gestion afin de procéder à l'envoi des événements consommés et recharger le crédit selon les modalités convenues avec cet usager par exemple via une carte de crédit.

Le document WO01/52124 propose l'utilisation d'un porte-monnaie électronique, sous la forme d'une carte à puce par exemple, qui permet de transférer un crédit stocké dans la carte vers un module sécurisé du décodeur. Ce transfert est effectué par la connexion locale dudit porte-monnaie avec le décodeur. Il est prévu à cet effet que ce porte-monnaie remplace temporairement la carte d'accès conditionnel du diffuseur. Le décodeur peut traiter l'accès aux contenus encryptés d'une manière locale et sûre. Un centre autorisé peut relever les données statistiques de consommation via un modem qui est connecté au décodeur.

Le document US 6,126,069 décrit un système similaire à celui du document précédent. Une carte sert d'intermédiaire pour le transport du crédit vers un décodeur. Cette carte sert donc de porte-monnaie électronique et le crédit stocké est débité selon l'utilisation. Cette méthode garantit l'anonymat car ce crédit peut être acheté dans un distributeur comme dans le cas d'une carte téléphonique. Cette solution est d'ailleurs identique à un service de téléphonie à pré-paiement.

EP0757337 traite d'un autre problème qui est de revalider une carte à puce à distance. Il s'agit d'une carte pré-payée sur laquelle on souhaite ajouter un crédit. La procédure utilise un terminal qui a accès à un centre de revalidation, cette opération étant soumise à l'introduction d'un mot de passe.

US 5,144,663 décrit le principe de la télévision à péage dans son ensemble dont un des aspects est la gestion d'un crédit pour l'achat impulsif de contenus encryptés.

DE19846452 décrit une méthode et un système de contrôle d'accès à un système à accès restreint aux données. L'utilisateur transmet des informations d'identification au moyen d'un téléphone portable comportant une carte mémoire pour stocker ces informations. Ces dernières sont transmises localement à un décodeur pourvu d'un module émetteur récepteur apte à communiquer avec le téléphone portable. Ce dernier joue ici un rôle similaire à une carte qui permet à l'utilisateur de s'identifier afin de libérer l'accès aux données à accès restreint. Selon un mode de réalisation, après autorisation de l'accès, le décodeur communique avec l'opérateur ou avec une station de base du réseau mobile servant de voie de retour afin de facturer les services payants. Le décodeur, dans ce cas, sert de relais entre le téléphone portable et l'opérateur ou la station de base.

Comme dans le document précédent le système décrit dans le document WO02/21835 permet de communiquer avec un opérateur, par l'intermédiaire de l'unité d'utilisateur, en utilisant un appareil de communication sans fil. Celui-ci sert ainsi de voie de retour au décodeur avec lequel il est relié. Le décodeur joue ici également le rôle d'un relais entre l'équipement mobile de l'utilisateur et le centre de gestion.

Dans un grand nombre de cas, d'une part l'unité d'usager ne dispose pas de voie de communication vers un centre de gestion et d'autre part, on souhaite éviter de répertorier tous les usagers dans une base de données avec leurs moyens de paiement. Ainsi les documents cités ne permettent pas de résoudre les buts de l'invention, à savoir la création d'un ensemble d'unités d'utilisateurs sans voie de retour et sans connaissance du propriétaire de chaque unité.

Le but de la présente invention est de proposer une manière innovante d'offrir à une large clientèle l'accès à la télévision à péage tout en diminuant drastiquement les coûts liés à la gestion des abonnés.

Ce but est atteint par un système comprenant un centre de gestion transmettant, via un canal de diffusion, un flux de données encryptées par des mots de contrôle (CW), ces mots de contrôle étant inclus dans des messages de contrôle (ECM), ce flux de données étant destiné à être reçu par ou moins une unité d'utilisateur reliée à **une unité** de sécurité identifié par une adresse unique, **cette unité de sécurité** contenant un crédit qui est décrémenté selon l'achat de produits ou de la consommation du flux de données, caractérisé en ce que l'unité de sécurité comprend des moyens pour décrémenter le crédit d'un montant correspondant à un produit ou d'un montant correspondant à une durée, ce montant et/ou cette durée étant défini dans le message de contrôle (ECM) ou dans un message de gestion (EMM), l'utilisateur disposant de moyens **de communication séparés** de l'unité d'utilisateur distinct du canal de diffusion pour **transmettre** au centre de gestion un identifiant représentatif du numéro unique et un code valeur représentant un montant de recharge du crédit, le centre de gestion comprenant des moyens pour traiter et vérifier le code valeur et pour transmettre, **via le canal de diffusion, à l'unité** de sécurité, un message encrypté comprenant l'adresse unique et le montant pour recharger le crédit.

Ainsi, selon l'invention, les moyens de recharge du crédit sont indépendants de l'unité d'utilisateur tout en gardant le centre de gestion comme superviseur des opérations de recharge. De plus, la transmission de ce code valeur VC permet de supprimer la facturation à l'usager car ce code valeur contient déjà les informations prouvant que l'usager à acquis le droit à cette valeur. Selon les solutions de d'état de la technique, le centre de gestion traite d'une manière indépendante le crédit du client (facturation, carte de crédit) et lui transmet via le modem, l'instruction de recharge.

Selon l'invention, le code valeur est transmis selon l'un des modes décrit ci-dessous et l'instruction de recharge est envoyée dans le flux de données encryptées, dans un message de gestion par exemple.

Ce code valeur (VC) peut prendre plusieurs formes :
1. un numéro unique est contenu sur une carte à gratter et définit un crédit pré-payé. Ces cartes sont vendues dans les magasins et comprennent une partie cachée par un couche facile à enlever avec l'ongle ou une pièce de monnaie. Le numéro ainsi révélé est un numéro unique généré par un système cryptographique, c'est-à-dire qu'il doit respecter des règles strictes quant à son format. Il n'est de ce fait pas possible (ou avec des probabilités très faibles) de générer un tel numéro qui soit reconnu comme valide par le centre de gestion. A ce numéro est associé une valeur qui est celle que l'utilisateur a payé pour acquérir cette carte. Une fois ce numéro utilisé, il n'est pas possible de le présenter à nouveau au centre de gestion.
2. un numéro de compte bancaire ou de carte de crédit et le montant de recharge. Selon les modalités acceptées par le centre de gestion et en accord avec les organismes bancaires, l'utilisateur peut transmettre son numéro de carte bancaire et du montant souhaité pour être débité de son compte. Dans cette variante, il est possible d'utiliser un module de sécurité amovible et de l'insérer dans une borne à cet effet. Cette borne permet soit de recevoir de l'argent liquide (billets par exemple) ou de lire une carte bancaire (voire une carte de crédit). Une fois que le montant souhaité par l'utilisateur a été dûment vérifié (soit par les billets introduits dans la fente de l'automate, soit par l'autorisation de l'organisme bancaire), la borne contacte le centre de gestion et un message de recharge du crédit est envoyé à la borne qui le transfère au module de sécurité. Durant cette opération, il est possible de collecter des informations sur la consommation de l'utilisateur, informations qui sont conservées dans son module de sécurité.
3. un numéro de téléphone ou d'identificateur de téléphonie sans fil et le montant de recharge. L'utilisateur peut simplement envoyer à l'adresse du centre de gestion, le montant de recharge désiré. Dans ce message est compris automatiquement le numéro de l'expéditeur et selon les accords entre l'opérateur de téléphonie et le centre de gestion, le montant de recharge est débité sur le compte téléphonique.

Selon le mode opératoire choisi, l'utilisateur communique le code valeur au centre de gestion accompagné de l'identifiant de son unité d'utilisateur. Dans ce type d'application, le numéro unique du module de sécurité sera considéré comme le numéro de l'ensemble formé par l'unité de l'utilisateur et l'unité de sécurité. Pour des raisons de simplification, il est possible de générer un code simplifié représentatif du numéro unique. En effet, ce numéro unique est généralement un numéro comportant un grand nombre de digits qui sont nécessaires pour le système (date de création, version etc.) mais pas indispensable pour identifier une unité. C'est pourquoi il est prévu d'afficher sur l'unité d'utilisateur (STB) un numéro raccourci mais suffisant pour différencier chaque unité.

Selon un mode particulier de réalisation, il est possible pour l'utilisateur de communiquer au centre de gestion un autre numéro en lieu et place du numéro raccourci dans une procédure d'initialisation. Il peut s'agir par exemple du numéro de téléphone de l'utilisateur. Le centre de gestion vérifie que ce nouveau numéro est bien unique et associe ce numéro au numéro unique (UA). Dès lors, il sera possible de remplacer l'identification de l'ensemble de l'utilisateur par le numéro de téléphone.

Pour recharger son crédit, l'utilisateur peut utiliser un serveur vocal et un téléphone classique disposant de l'envoi de signaux par DTMF. Après avoir acheté une carte valeur (solution 1 du code valeur), il appelle le serveur vocal du centre de gestion. Il est invité à introduire le numéro de l'identifiant et le code valeur apposé sur la carte.

Cette opération prend peu de temps; le centre de gestion vérifie la conformité du code valeur et de l'identifiant et si ces données sont correctes, prépare un message à destination de cette unité d'utilisateur.

Le message est transmis par le canal de diffusion sous forme encryptée et seul le module de sécurité dispose des moyens pour décrypter ce message. Chaque module de sécurité recevant ce message vérifie si le numéro unique contenu dans le message correspond à son numéro et dans la négative, l'ignore.

Pour le module répondant à l'adresse unique (UA), le montant du crédit contenu dans ce message est ajouté au crédit restant.

L'appellation centre de gestion est à comprendre au sens large. En effet, dans la pratique cette entité est subdivisée en plusieurs modules qui peuvent être situés dans des lieux différents. Nous trouvons l'unité d'encryption des messages de contrôle (ECM), l'unité d'encryption des message de gestion (EMM) en charge de recharger le crédit. Parallèlement, l'unité de traitement des codes valeur peut été située dans un établissement bancaire si l'on considère la variante 2, à savoir la connexion avec un centre de crédit ou dans les locaux d'un opérateur téléphonique si l'on considère la variante 3, à savoir l'envoi d'un message court par son téléphone portable. Une fois le code valeur reconnu et traité, une liaison sécurisée permet d'informer l'unité d'encryption des messages de gestion et d'envoyer le message de recharge du crédit à son destinataire.

L'utilisateur dispose de moyens pour afficher en tout temps le crédit restant sur son téléviseur.

Selon le mode utilisant le téléphone portable, un simple message court (SMS) contenant le code valeur et l'identifiant de son unité, permet de recharger son crédit. Si, de plus, l'on a remplacé son identifiant par son numéro de téléphone, seul le code valeur est à envoyer, le numéro de téléphone étant automatiquement transmis au destinataire.

Lorsque le crédit est suffisant dans l'unité de sécurité (SC), plusieurs modes opératoires sont possibles à savoir:
- abonnement impulsif: l'utilisateur décide d'utiliser tout ou partie de son crédit pour acheter un abonnement à un ou des canaux. Ainsi, un nouveau droit est créé dans l'unité pour la réception desdits canaux sans qu'une nouvelle action sur son crédit soit nécessaire.
- achat impulsif : l'utilisateur peut décider d'acheter une émission ou un groupe d'émissions (une série ou une rétrospective) et un droit correspondant est créé dans l'unité de sécurité.
- décomptage au fil du temps : l'utilisateur peut décider de ne payer que ce qu'il consomme réellement et le crédit est consommé selon un mode de paiement par unité de temps.

Les deux premiers modes sont de préférence gérés par des messages de gestion (EMM) car ils créent un droit à l'intérieur du module de sécurité. Alors que le troisième mode peut fonctionner qu'avec les messages de contrôle (ECM) dans lesquels l'on place la valeur de l'unité ainsi que la durée acquise.

Lorsqu'un message de contrôle (ECM) est présenté au module de sécurité, on vérifie les droits selon une hiérarchie partant du droit le plus large au plus étroit. Ainsi par exemple on vérifie premièrement si l'utilisateur possède un abonnement pour ces droits, puis, dans la négative si un droit pour achat impulsif existe et en dernier ressort, on va débiter le crédit par unité de temps.

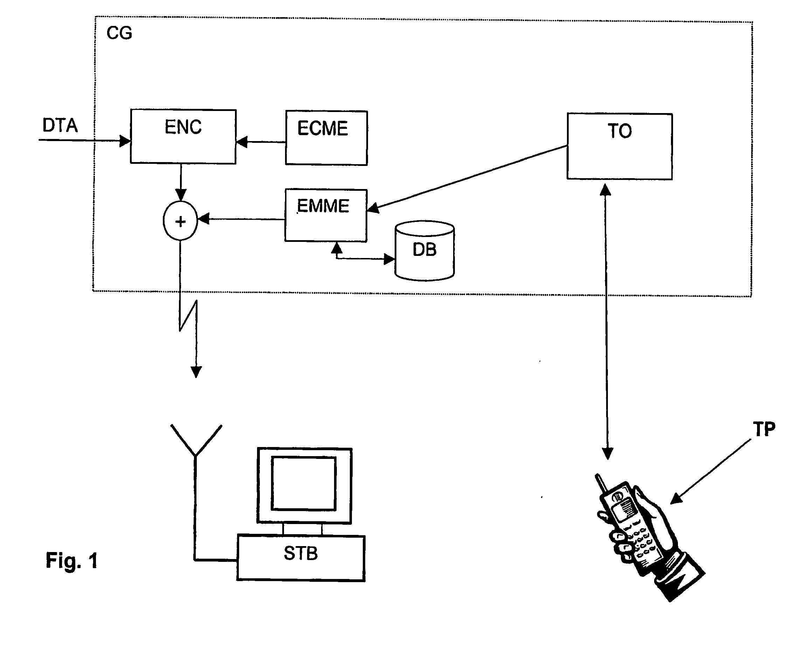

Sur la figure 1, un exemple d'implémentation est illustré. Il s'agit de la variante 3 du code valeur. Le centre de gestion (CG) est illustré par plusieurs éléments tels qu'un opérateur téléphonique (TO), un module (ENC) d'encryption des données (DTA), un module (ECME) de contrôle des clés d'encryption (CW) en charge de générer les messages de contrôle (ECM) et un module de gestion (EMME) en charge de générer les messages de recharge du crédit vers les unités de sécurité.

Chaque décodeur (STB) comprend un module de sécurité (SC) qui mémorise le crédit (CR) de l'utilisateur.

Selon l'exemple du code valeur sous la forme d'une carte à gratter, comprenant un numéro unique, l'utilisateur utilise son téléphone portable (TP) pour transmettre ce numéro unique par liaison avec l'opérateur de téléphonie (TO). Cet opérateur reçoit cette information et la transmet au module de gestion (EMME) avec le numéro de téléphone de l'utilisateur. La validité de ce numéro est vérifiée grâce à une base de données (DB) des numéros valides et si c'est la première utilisation de ce numéro, la valeur correspondante (TA) est retournée par la base de données. Ce numéro est ensuite irrévocablement invalidé.

Grâce au numéro de téléphone fourni par l'opérateur de téléphone, le module de gestion (EMME) en déduit le numéro unique (UA) de l'unité de sécurité et un message correspondant peut être envoyé par la voie classique de transmission (câble, hertzienne, etc..). Ce message est généralement répété durant plusieurs jours. A ce propos, il est utile d'ajouter que le module de sécurité comprend des moyens pour n'exécuter le message qu'une seule fois. Ceci est assuré par un identifiant du message qui est également encrypté par des clés de transmission. Cet identifiant est mémorisé dans l'unité de sécurité dès lors qu'un tel message est reçu et exécuté. L'unité de sécurité attend désormais un identifiant différent ou plus grand.

Selon cette manière de procéder, la base de données conserve une trace du montant rechargé pour chaque unité de sécurité. Il est possible de vérifier la consommation de chaque unité et de détecter les tentatives de fraude. De plus, la somme des montants rechargés doit toujours être inférieure à la somme des cartes valeur en circulation.

## Revendications

1. Système comprenant un centre de gestion (CG) transmettant, via un canal de diffusion, un flux de données encryptées par des mots de contrôle (CW) ces mots de contrôle étant inclus dans des messages de contrôle (ECM), ce flux de données étant destiné à être reçu par ou moins une unité d'utilisateur (STB) reliée à une unité de sécurité (SC) identifiée par une adresse unique (UA), cette unité de sécurité (SC) contenant un crédit (CR) qui est décrémenté selon l'achat de produits ou de la consommation du flux de données et qui peut être rechargé par un message de gestion (EMM), **caractérisé en ce que** l'unité de sécurité comprend des moyens pour décrémenter le crédit d'un montant (M1) correspondant à un produit ou d'un montant (M2) correspondant à une durée (T), ce montant (M1, M2) et/ou cette durée (T) étant défini dans le message de contrôle (ECM) ou dans le message de gestion (EMM), l'utilisateur disposant de moyens de communication séparés de l'unité d'utilisateur (STB) distinct du canal de diffusion pour transmettre au centre de gestion (CG) un identifiant représentatif du numéro unique (UA) et un code valeur représentant un montant (TA) de recharge du crédit (CR), le centre de gestion comprenant des moyens pour traiter et vérifier le code valeur (VC) et pour transmettre, via le canal de diffusion, à l'unité de sécurité (SC), un message encrypté comprenant l'adresse unique (UA) et le montant (TA) pour recharger le crédit (CR).

2. Système selon la revendication 1, **caractérisé en ce que** le code valeur (VC) comprend un numéro de compte bancaire ou carte de crédit et le montant de recharge (TA).

3. Système selon la revendication 1, **caractérisé en ce que** le code valeur (VC) est un code unique et préétabli par le centre de gestion et répondant à des règles de composition cryptographiques, et **en ce que** le centre de gestion comprend des moyens pour vérifier ce code et en extraire la valeur qui sera créditée dans l'unité de sécurité (SC).

4. Système selon la revendication 1, dans lequel l'utilisateur dispose d'un numéro de téléphone (TN), **caractérisé en ce que** l'utilisateur comprend des moyens pour associer le numéro unique (UA) à son numéro de téléphone (TN) et **en ce que** le code valeur (VC) est transmis au centre de gestion avec le numéro de téléphone (TN), ledit centre comprenant des moyens pour transmettre le message de recharge à l'unité d'utilisateur (STB) dont le numéro unique (UA) est associé à ce numéro de téléphone.

5. Système selon l'une des revendications précédentes, **caractérisé en ce que** le produit est un abonnement de télévision à péage pour une durée déterminée ou une émission ou groupe d'émissions à achat impulsif.

## Claims

1. System comprising a managing center (CG) transmitting, via a broadcasting channel, a data stream encrypted by control words (CW), these control words being included in control messages (ECM), this data stream is intended to be received by at least one user unit (STB) linked with a security module (SC) identified by a unique address (UA), this security module (SC) containing a credit (CR), which is decreased according to the purchase of products or to the consumption of the data stream, **characterized in that** the security module includes means to decrease the credit of a amount (M1) relating to a product or to a amount (M2) relating to a duration, this amount (m1, M2) and/or this duration (T) being defined in the control message (ECM) or in a management message (EMM), the user having user unit separate communication means distinct to the broadcasting channel for transmitting an identifier representative of the unique address (UA) and a value code (VC) representing an amount (TA) of the credit (CR) reload to the managing center (CG), the managing center having means to deal with and verify the value code (VC) and to transmit, via the broadcasting channel, to the security module (SC) an encrypted message having the unique address (UA) and the amount (TA) to reload the credit (CR).

2. System according to claim 1, **characterized in that** the value code (VC) comprises a bank account or credit account number and the reload amount (TA).

3. System according to claim 1, **characterized in that** the value code (VC) is a unique code and is pre-established by the managing center and complying with the cryptographic composition rules, and **in that** the managing center comprises means to check this code and extract the value which will be credited in the security module (SC).

4. System according to claim 1, in which the user has a phone number (TN), **characterized in that** the user has means to associate the unique address (UA) to his phone number (TN) and **in that** the value code (VC) is transmitted to the managing center with the phone number (TN), said center having means to transmit the reload message to the user unit (SC) whose unique address (UA) is associated to this phone number.

5. System according to one of the previous claims, **characterized in that** the product is a paying TV subscription for a determined duration or a transmission or group of transmission for impulsive purchase.

## Patentansprüche

1. System mit einem Verwaltungszentrum (CG), das über einen Sendekanal einen Strom von durch Steuerwörter (CW) verschlüsselten Daten übermittelt, wobei diese Steuerwörter in Steuernachrichten (ECM) enthalten sind, dieser Datenstrom dafür bestimmt ist, von zumindest einer Benutzereinheit (STB) empfangen zu werden, die an eine Sicherheitseinheit (SC) angeschlossen ist, die durch eine einmalige Adresse (UA) identifiziert ist, und diese Sicherheitseinheit (SC) ein Guthaben (CR) enthält, das je nach dem Kauf von Produkten oder dem Verbrauch von Datenströmen dekrementiert wird und das durch eine Verwaltungsnachricht (EMM) aufgefüllt werden kann, **dadurch gekennzeichnet, dass** die Sicherheitseinheit Mittel umfasst, um das Guthaben um einen Betrag (M1) zu dekrementieren, der einem Produkt entspricht, oder um einen Betrag (M2), der einer Zeitdauer (T) entspricht, wobei dieser Betrag (M1, M2) und/oder diese Zeitdauer (T) in der Steuernachricht (ECM) oder in der Verwaltungsnachricht (EMM) definiert werden, während der Benutzer über Kommunikationsmittel verfügt, die von der Benutzereinheit (STB) getrennt und vom Sendekanal verschieden sind, um an das Verwaltungszentrum (CG) eine Kennung, die für die einmalige Adresse (UA) steht, sowie einen Wertcode, der einen Betrag (TA) der Auffüllung des Guthabens (CR) darstellt, zu übermitteln, und das Verwaltungszentrum über Mittel verfügt, um den Wertcode (VC) zu verarbeiten und zu überprüfen und um über den Sendekanal an die Sicherheitseinheit (SC) eine verschlüsselte Nachricht zu übermitteln, die die einmalige Adresse (UA) sowie den Betrag (TA) der Auffüllung des Guthabens (CR) enthält.

2. System nach Anspruch 1, **dadurch gekennzeichnet, dass** der Wertcode (VC) die Nummer eines Bankkontos oder einer Kreditkarte sowie den Auffüllbetrag (TA) umfasst.

3. System nach Anspruch 1, **dadurch gekennzeichnet, dass** der Wertcode (VC) ein einmaliger Code ist, der vom Verwaltungszentrum im Voraus aufgestellt wurde und kryptographischen Regeln der Zusammensetzung entspricht, und **dadurch**, dass das Verwaltungszentrum Mittel umfasst, um diesen Code zu überprüfen und daraus den Wert herauszuziehen, der in der Sicherheitseinheit (SC) gutzuschreiben ist.

4. System nach Anspruch 1, in dem der Benutzer über eine Telefonnummer (TN) verfügt, **dadurch gekennzeichnet, dass** der Benutzer Mittel umfasst, um die einmalige Adresse (UA) mit seiner Telefonnummer (TN) zu verbinden, und **dadurch**, dass der Wertcode (VC) zusammen mit der Telefonnummer (TN) an das Verwaltungszentrum übermittelt wird, wobei das Zentrum Mittel umfasst, um die Auffüllnachricht an die Benutzereinheit (SC) zu übermitteln, deren einmalige Adresse (UA) mit dieser Telefonnummer verbunden ist.

5. System nach einem der vorangehenden Ansprüche, **dadurch gekennzeichnet, dass** das Produkt ein Gebührenfernsehabonnement für eine bestimmte Zeitdauer oder eine Sendung oder eine Gruppe von Sendungen zum Spontankauf ist.
